Europäisches Patentamt

European Patent Office

Office européen des brevets

(11) Publication number: **0 394 230 B1**

# EUROPEAN PATENT SPECIFICATION

(45) Date of publication of patent specification: **07.04.93**  (51) Int. Cl.5: **A01N 57/28**

(21) Application number: **88903237.1**

(22) Date of filing: **08.04.88**

(86) International application number:
**PCT/EP88/00290**

(87) International publication number:
**WO 89/09543 (19.10.89 89/25)**

(54) **NOVEL COMPOSITION AND METHOD OF CONTROLLING OF COCKROACH POPULATION.**

<div style="display:flex">
<div>

(43) Date of publication of application:
**31.10.90 Bulletin  90/44**

(45) Publication of the grant of the patent:
**07.04.93 Bulletin  93/14**

(84) Designated Contracting States:
**BE CH DE FR GB IT LI NL**

(56) References cited:
**GB-A- 2 174 908**

**Journal of Economic Entomology, vol. 79,
no.4, August 1986, Entomologocal Society of
America (College Park, MAryland, USA), G.W.
Bennett et al.:"Influence of hydroprene on
German cockroach (Dictyoptera: Blattel-
lidae) populations in public housing", pages
1032-1035, see table I**

</div>
<div>

(73) Proprietor: **SANDOZ-PATENT-GMBH**
**Humboldtstrasse 3**
**W-7850 Lörrach(DE)**

Proprietor: **SANDOZ AG**
**Lichtstrasse 35**
**CH-4002 Basel(CH)**

(72) Inventor: **RUDOLPH, Robin, R.**
**513 Michael Drive**
**Grand Prairie, TX 75051(US)**

</div>
</div>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.5x/3.0.1)

**Description**

This invention concerns insecticidal compositions comprising propetamphos and hydroprene. The novel compositions are useful for control of cockroach populations and/or for prophylactic protection against cockroach infestation.

"Propetamphos" as used herein in the common name for (E)-1-methylethyl-3-[[(ethylamino)-methoxyphosphinothioyl]oxy]-2-butenoate. The use of propetamphos as an insecticide and the synthesis thereof is described by Leber and Lutz, U.S. Patent 3,758,645.

"Hydroprene" as used herein in the common name for ethyl(2E,4E)-3,7,11-trimethyl-2,4-dodecadienoate. The use of hydroprene as an IGR and the synthesis thereof in described in U.S. patent 4,021,461. There is an asymmetric carbon atom at the C-7 in hydroprene and, accordingly, there are (R) and (S) enantiomers of the compound. As used herein "(R,S)-hydroprene" refers to the racemic mixture and "(S)-hydroprene" refers to the (S)-(+) enantiomer form of hydroprene. Where "hydroprene" in used herein without reference to its enantiomeric content, the term is inclusive of both (R,S)-hydroprene and (S)-hydroprene.

The current invention is also directed to a method of controlling a cockroach population which method comprises applying to a locus of the cockroach population, in an effective cockroach population controlling aggregate amount of (a) hydroprene, and (b) propetamphos.

Background

The cockroach is one of the most difficult insects to control. It is primarily a nocturnal insect which forages in exposed locations at night and finds hidden harborages during the day. The life cycle of the cockroach begins with eggs formed in capsules called ootheca. The eggs first hatch into Stage I nymphs which then progress over about 74 days through five more nymphal Stages II-VI to fully developed adult cockroaches. In her adult life span, the female adult cockroach lives for approximately 144 days and produces six ootheca containing about 40 eggs each. Thus the population growth potential is tremendous.

A cockroach population continues to grow in a geometrical fashion as long as the three basic requirements of food, water and harborage are sufficient. Oftentimes, a cockroach population viii be found to have stabilized in number because of some limitation in one or more of the three basic requirements.

There are two possible ways to deal with the cockroach infestation. One is to submit the cockroach population to a repeated treatment with insecticide. The second is to submit it to a repeated treatment with an insect growth regulant (IGR) which will interfere with cockroach maturation and fertility.

It has been observed that if a stabilized cockroach population is under stress, for example when it is temporarily stressed by application of an insecticide, and the stress is ended (e.g., the residual activity of the insecticide has become ineffective), the cockroach population responds to the end of the stress by producing increased numbers of young cockroaches much beyond the previously stabilized population level. The population explosion occurs whenever the insecticide looses its toxic effect on the cockroaches. That in particularly true in cases when the insecticide does not affect or interfere with the reproductive potential of surviving cockroaches.

The application of insecticide alone thus has an immediate but short-term effect on reducing the cockroach population as the residual activity of an insecticide effective on a cockroach population generally does not last for more than about eight weeks. In addition, because of the high toxicity of insecticides, it is often necessary and preferable to restrict the number of applications and the areas to which the insecticide is applied to prevent a health hazard to people.

An alternative to treatment with insecticides is to treat the infested area with an environmentally safe IGR such as hydroprene. The drawback of treatment with hydroprene or the other IGRs is the long time period before the effect on cockroaches is observed. Such delay is caused by the IGRs' mode of action. When an IGR in applied to the locus of cockroach infestation the adult cockroaches are not affected at all and the immature nymphs seemingly continue to develop through successive stages to adults. However, if the cockroaches during their nymphal development come into contact with an IGR they become irreversibly morphologically deformed and physiologically unable to reproduce. This effect, together with the residual activity of IGRs, greatly impacts the cockroach population as the viable reproducing individuals begin to decline in number around four to six months after the first application of IGR to the locus of the population.

Thus, a scaled-up test in a 1000 cubic foot testing chamber simulating a kitchen with a fairly heavy German cockroach infestation has shown that a single application of a 1.2% (R,S)-hydroprene fogger at 250 ml per 100 $m^2$ provides some degree of supression of the cockroach population. However, the complete eradication of cockroaches was never accomplished.

Definitions

An "insect growth regulator" as used herein, is a compound which in effective in regulating the growth and maturation processes of an insect.

The term "locus of the cockroach population" as used herein refers to unit areas such as an apartment, apartment building, restaurant, house, warehouse, theater, office and office building, and the like wherein there exists an infestation of cockroaches which may or may not be a stabilized population of cockroaches.

The term "control of a cockroach population " as used herein means a significant percentage decrease in the number of cockroaches in the tested facility. Controlled cockroach population means the number of cockroaches acceptable to the occupants or users of that particular facility.

The term "spot treatment" as used herein and in the appended claims means that the formulation is applied as a spot or crack and crevice treatment and not to the general space or forage areas.

It has now been found that combined application of the IGR hydroprene and the insecticide propetamphos to the locus of the cockroach population provides a safe, fast, complete, long-lasting and highly effective control of the cockroach population. Surprisingly, the combination of active ingredients hydroprene and propetamphos and their application individually or in admixture to cockroach infested places overcomes the disadvantages (short effect of propetamphos and long delay following the hydroprene treatment) of each active ingredient alone. The application of a combination of both active ingredients to the locus of a cockroach population produces a significantly greater percent reduction than the application of either hydroprene or propetamphos alone, and such reduction is greater than the additive effect of both active compounds when used separately.

Propetamphos possesses moderate to good residual activity (ca. 60 days).

The application of propetamphos alone to cockroach infested apartments results in immediate (within one month) reduction of cockroaches by approximately 50-60%. The level of activity reaches its peak at approximately 60 days and then gradually decreases in efficacy so that at 120 days (4 months) the infestation may be back to 64-50% depending on the climate and other surrounding conditions.

Hydroprene has no insecticidal activity or direct toxicity to the insect at any of the morphogenetic stages. Thus, the application of hydroprene to a population of cockroaches has no immediate, short term beneficial effect. The adult insects remain unaffected and immature insects although morphogenetically inferior still continue to develop to on infertile adult. As a consequence the cockroach population begins to show a decline in numbers about six months after the hydroprene treatment.

Probably due to the initial stress, for the first four months, the application of hydroprene alone results in an increase of cockroaches. Only after four months does this level gradually decrease.

It has now been found that the combination of hydroprene and propetamphos decreases the cockroach population during the same interval to an extent greater than the additive effect can account for.

Administration and Formulation

In practice, both the active ingredients propetamphos and hydroprene may be administered either in admixture or individually in separate steps but in close time sequence so that one treatment follows immediately the other. In the latter case it does not appear to be critical as to whether the hydroprene formulation or the propetamphos formulation is applied first. For convenience and saving of time, it is preferred to apply the spot treatment of propetamphos first and then immediately to apply the general space treatment using a hydroprene aerosol fogger.

The hydroprene is conveniently in liquid formulation, e.g. in fogger, aerosol or emulsifiable concentrate form. The propetamphos is conveniently in liquid (e.g., emulsifiable concentrate formulation form) or in solid formulation form (wettable powder, granule or dust).

Hydroprene is usually applied to the locus of the cockroach population as a general space treatment. As such, the preferred application is by use of a fogger or an aerosol which provides excellent coverage of general forage areas and harborages of the cockroaches. Hydroprene can also be administered as an emulsifiable concentrate using a suitable sprayer.

Propetamphos is usually applied to the locus of the cockroach population either as a general space treatment or as a spot treatment. For health reasons the spot treatment is preferred. For both treatments, the usual mode of administration is by sprayer, duster or aerosol which permits careful direction of the application of the insecticide. The propetamphos is primarily applied to harborages such as baseboards, storage areas, closets, around water pipes, behind and under cabinets, and similar areas.

Hydroprene is conveniently administered at a rate of from 1 to 50, preferably of from 2 to 36, more preferably of from 3 to 30 mg/m$^2$.

(RS)-hydroprene is conveniently administered at a rate of from 12 to 50, preferably of from 18 to 36, more preferably of from 20 to 30 mg/m$^2$.

(S)-hydroprene is conveniently administered at a rate of from 1 to 20, preferably of from 2 to 15, more preferably of from 3 to 13 mg/m$^2$.

Propetamphos is conveniently administered at a rate of from 52 to 224 mg/m$^2$, preferably of from 76 to 148, more preferably of from 100 to 124 mg/m$^2$.

Where necessary, the treatment is repeated, e.g. 4 months after the initial treatment employing similar or lower application rates. Even after total eradication of the cockroach population it is advisable to prophylatically repeat the treatment according to the invention.

When the hydroprene and/or propetamphos formulation is an aerosol, volume deliveries will in general vary from 250 ml to 1000 ml per 100 m$^2$. Where the hydroprene and/or propetamphos formulation is an emulsifiable concentrate, volume deliveries will in general vary from 500 ml to 2000 ml per m$^2$. The weight per weight concentration of the formulation to be applied will of course depend on the volume delivery. Thus an application rate of 50 mg/m$^2$ may be achieved with a 250 ml/100m$^2$ volume delivery of a 2.0% w:w formulation, or with a 500 ml/m$^2$ volume delivery of a 1% w:w formulation, etc.

The mixture of propetamphos and hydroprene is administered through any acceptable mode of the application of pesticides such as spraying, fogging, dusting, painting, spreading, etc.; however, the administration in the form of a propetamphos emulsifiable concentrate mixed with the hydroprene concentrate is preferred.

Application is to the whole facility but particularly to cracks, crevices and spots.

A mixture of propetamphos with hydroprene may be formulated in any suitable formulation form, e.g. in liquid form, as a ready-to-use formulation, an aerosol, an emulsifiable concentrate or in solid form.

One suitable method of preparing the (RS)-hydroprene/propetamphos mixture, or the (S)-hydroprene/propetamphos mixture is to blend concentrates of diluted propetamphos with a suitable carrier substance and then mix the resulting composition with technical or diluted (RS)- or (S)-hydroprene.

The formulations of the present invention either individually or in the mixture may include conventional insect control formulation adjuvants, diluents, modifiers or conditioning agents, herein included in the term "suitable carrier substance" to provide formulations in the form of solutions, emulsions, dispersions, powders, dusts, granules and the like. The liquid formulations of the present invention can contain one or more surface active agents as a conditioning agent to render the formulation readily dispersible in water or other liquid. The term "surface active agents" includes wetting agents, sticking agents, dispersing agents, emulsifying agents, and the like. The solid formulations of the present invention in the form of powder, dust or granules can be prepared using such substances as talc, natural clay, diatomaceous earth and silica, particularly finely divided silica such as Hi-Sil.

The amount of active ingredient in the formulations of the present invention will vary according to the formulation and the manner in which the formulation is to be applied but, in general, will be from about 0.1-20% for propetamphos and 0.01-10% for hydroprene. The weight ratio of propetamphos to hydroprene will conveniently vary within the range of from 1:1 to 224:1, preferably from 3.3:1 to 41.3:1. The weight ratio of propetamphos to (RS)-hydroprene is generally from about 1:1 to 18,7:1, preferably from 3.3:1 to 6.2:1 by weight and for propetamphos to (S)-hydroprene from about 224:1, preferably from 7,7:1 to 41.3:1 by weight.

The following examples are provided to illustrate how to practice the present invention. They should not be construed as narrowing or limiting its scope. In all examples, all parts and percentages are by weight unless otherwise specified.

## EXAMPLE 1

### Field Evaluations

Four types of insecticidal agents - hydroprene, propetamphos, dichlorvos and chlorpyrifos - and combinations thereof were tested individually or as a mixture in field trials for their effectiveness against cockroaches. In addition to the various insecticides, methods of application and the frequency of application, various formulations were also evaluated in this testing regime.

## Cockroach Population Assessment

### Testing Sites and Controls

Suitable apartment complexes for testing were located. To qualify for testing, each apartment complex had to have a certain degree of cockroach infestation.

Either a negative or positive control was maintained. If apartments were used in the test, the control units were in the same complex but separated so as to avoid migration. Complexes were ideally units in a single building on one side of a parking lot for the treated group and the same number of units of identical construction were on the other side of the parking lot for the control group.

Special care was taken to assure that the complexes were completely separated from each other to prevent the migration of cockroaches.

### Qualifications for Testing Requirements

To qualify as a test site, a minimum pretreatment count of 15 cockroaches daily per three traps was required. If, using this criteria, the majority of the apartments in one complex qualified, all the apartments in the complex were used for testing of one type of insecticidal agent. The total number of pre-treatment cockroaches trapped in the complex were counted within the month prior to treatment and such counting was repeated monthly during the treatment up to the end. Then, each testing period was expressed as the average percent reduction over all the apartments in a complex treated with one agent.

Once the apartment complexes qualified, the random assignment to treat each complex with a different agent was made and a letter to that effect was sent out to all tenants to explain what would be done it their apartments.

### Monitoring Methods

Each test site was monitored within at least one month prior to treatment to establish a pre-treatment level of cockroach infestation. For the determination of pretreatment level of infestation the trap count monitoring method was preferred. In some instances, the trap count was supplemented by visual count.

Controls were monitored identically to the treated groups.

### Trap counts

In most instances, three sticky cockroach traps (usually Black Flag Roach Motel®) with attractant were placed in the apartment in areas of apparent heaviest infestation. The three traps were placed in the kitchen of each apartment for 24 hours. The trap locations were as follows: 1) on the counter near the sink, 2) in the cabinet underneath the sink, and 3) on the floor near the range or the refrigerator. The same locations of these traps were monitored monthly up to twelve months. Individual trap counts were made for each apartment over the entire study. If only one or two traps were used to determine pretreatment infestation levels, then throughout the whole study only that location was monitored. After 24 hours of monitoring, the traps were collected and brought back to the laboratory for counting.

The traps were left out for 24 hours, then collected, and cockroaches were counted as normal adults, IGR adults and nymphs. The raw data were then recalculated for percent of reduction using the following formula:

$$\frac{T_o - T_i}{T_o} \times 100 = \text{Percent Reduction}$$

$T_o$ = pretreatment count
$T_i$ = posttreatment count at the time i

Interpretation of Data

Obtained data were expressed in the following Tables 2-14 as the percent of reduction (R%) of pretreatment count; the percent of juvenile hormone affected adults (IGR) comparing with normal adults only; the percent of adults (A) in the total population and the percent of nymphs (N) in the total population.

Visual counts

Some areas of primary harborage, particularly that of breeding ground, were visually inspected and counts of the cockroaches were logged for the month prior to the testing period. The same areas were monitored throughout the whole testing period, i.e. up to nine months following the application of the tested formulation.

Testing Materials

A. Propetamphos

The solution of propetamphos applied to designated apartment complexes was prepared from 50% propetamphos emulsifiable concentrate (EC) diluted with water to produce 1.0% solution. The 1.0% solution was applied with low pressure compressed air hand sprayer either as a spot, crack and crevice treatment or as a general space treatment according to the label instructions.

50% propetamphos EC was prepared as tank mix from the following formulating agents:

| Propetamphos-50% Emulsifiable Concentrate (EC) | | |
|---|---|---|
| Ingredients | (w/w%) | Source |
| Propetamphos Technical (90%) | 56.11 | Sandoz |
| Cellosolve® (ethylene glycol ethyl ether) | 38.89 | Union Carbide |
| Sponto® N-140-B (emulsifier) | 5.00 | Witco |

B. Hydroprene

The hydroprene applied to designated apartment complexes was supplied in the following formulations:

| (RS)-Hydroprene - 65.7% Emulsifiable Concentrate (EC) | | |
|---|---|---|
| Ingredients | (w/w)% | Source |
| (RS)-Hydroprene Technical (90%) | 74.56 | Zoecon |
| Igepal® CO-630 (surfactant) | 25.44 | GAF |
| 65.7% hydroprene EC is suitable for dilution with water. | | |

| 0.6% (RS)-Hydroprene Fogger Concentrate A | | |
|---|---|---|
| Ingredients | (w/w)% | Source |
| (RS)-Hydroprene 95.03% | 0.66 | Zoecon |
| methylene chloride (inhibited aerosol grade solvent) | 16.34 | Commodity |
| 1,1,1-trichloroethane (inhibited aerosol grade solvent) | 55.00 | Commodity |

| 0.6% (RS)-Hydroprene Fogger Concentrate B | | |
|---|---|---|
| Ingredients | W/W% | Source |
| (RS)-hydroprene (95.03%) | 0.89 | Zoecon |
| Methylene chloride (inhibited aerosol grade solvent) | 22.72 | Dow |
| 1,1,1-trichloroethane (inhibited aerosol grade solvent) | 76.39 | Dow |

| 0.6% (RS)-Hydroprene Fogger A | | |
|---|---|---|
| Ingredients | (w/w)% | Source |
| 15% Hydroprene Manufacturing Conc.* | 4.81 | Zoecon |
| Methylene Chloride (inhibited aerosol grade solvent) | 12.91 | DOW |
| 1,1,1-trichloroethane (inhibited aerosol grade solvent) | 55.0 | DOW |
| Propellant A-70 | 28.0 | Commodity |

*The hydroprene manufacturing concentrate is a dilution of technical hydroprene in methylene chloride at the 15% level.

| 0.6% (RS)-Hydroprene Fogger B | | |
|---|---|---|
| Ingredients | W/W% | Source |
| 0.6% (RS)-hydroprene fogger concentrate B | 72.0 | Zoecon |
| Propellant A-70 (Hydrocarbon Propellant) | 28.0 | Commodity |

| 1.2% (RS)-Hydroprene Fogger Concentrate A | | |
|---|---|---|
| Ingredients | (w/w)% | Source |
| (RS)-Hydroprene (95.03%) | 1.28 | Zoecon |
| Aerothene® MM | 15.72 | Commodity |
| Aerothene® TT | 55.00 | Commodity |

| 1.2% (RS)-Hydroprene Fogger Concentrate B | | |
|---|---|---|
| Ingredients | W/W% | Source |
| (RS)-hydroprene (95.03%) | 1.8 | Zoecon |
| Methylene Chloride (inhibited aerosol grade solvent) | 21.8 | Dow |
| 1,1,1-trichloroethane (inhibited aerosol grade solvent) | 76.4 | Dow |

| 1.2% (RS)-Hydroprene Fogger | | |
|---|---|---|
| Ingredients | (w/w)% | Source |
| 1.2% (RS)-Hydroprene fogger concentrate | 72 | Zoecon |
| A-70 propellant | 28 | Commodity |

0.6% (RS)-Hydroprene Aerosol

0.6% (RS)-hydroprene aerosols are prepared as 0.6% (RS)-hydroprene foggers and fitted with 0.020 in. MBST #01-5018 aerosol actuators rather than fogger actuators.

| 9.0% (S)-Hydroprene Emulsifiable Concentrate | | |
|---|---|---|
| Ingredients | W/W% | Source |
| (S)-Hydroprene Technical (91.0%) | 10.09 | Zoecon |
| Tenox 4 [1] Antioxidant | 0.50 | Eastman |
| Atlox 847 [2] Emulsifier | 19.03 | I.C.I. |
| Atlox 3404F [3] Emulsifier | 11.42 | I.C.I. |
| Isopar M [4] Solvent | 58.96 | Exxon |

[1] Antioxidant - Corn oil solution of BHT (Butylated hydroxytoluene) and BHA (butylated hydroxyanisole).
[2] Emulsifier: Alkoxylated polyol fatty acid ester.
[3] Emulsifier: Proprietary blend of nonionic and ionic emulsifiers
[4] Solvent: Isoparraffinic solvent.

| 0.3% (S)-Hydroprene Fogger | | |
|---|---|---|
| Ingredients | W/W% | Source |
| (S)-hydroprene Technical (91.0%) | 0.40 | Zoecon |
| Methylene Chloride (inhibited aerosol grade solvent) | 16.55 | Dow |
| 1,1,1-trichloroethane (inhibited aerosol grade solvent) | 55.00 | Dow |
| Propellant A-70 (hydrocarbon propellant) | 28.00 | Commodity |
| BHT-Antioxidant (butylated hydroxytoluene) | 0.05 | Eastman |

0.3% (S)-Hydroprene Aerosol

0.3% (S)-hydroprone aerosols are prepared as are the 0.3% (S)-hydroprene foggers except the actuators are suited to hand held aerosol delivery.

C. Hydroprene/Propetamphos Mixtures

1. Tank mixes

Hydroprene/propetamphos formulations were prepared by mixing 65.7% hydroprene EC with 50% propetamphos EC together in a tank of water just prior to use. The final EC tank mixture was applied according to instructions on the propetamphos label for application of propetamphos.

2. Combination Formulations

| 59.7% Propetamphos/7.2% (RS)-Hydroprene EC Formulation | | |
|---|---|---|
| Ingredients | W/W% | Source |
| Propetamphos technical (90%) | 76.2 | Sandoz |
| (RS)-Hydroprene technical (94%) | 6.5 | Zoecon |
| Tenox® 4 (anitoxidant) | 0.7 | Eastman |
| Atlox® 3406F (emulsifier) | 11.6 | ICI |
| Atlox® 3409 (emulsifier) | 5.0 | ICI |

This formulation in particular is preferred for applications to crack and crevice areas of the locus.

| Propetamphos/(RS)-Hydroprene Aerosol Formulation (Fogger) | | |
|---|---|---|
| Ingredients | W/W% | Source |
| Propetamphos technical (90%) | 1.20 | Sandoz |
| (RS)-Hydroprene (manufacturing concentrate 15%) | 4.81 | Zoecon |
| methylene chloride | 10.99 | Dow |
| 1,1,1-trichloroethane | 55.00 | Dow |
| A-46 propellant | 25.00 | Commodity |

The above formulation in particular is preferred for applications to crack and crevice areas of the locus.

| Propetamphos/(RS)-Hydroprene Solid Formulation | | |
|---|---|---|
| Ingredients | W/W% | Source |
| Propetamphos (technical 90%) | 1.33 | Sandoz |
| (RS)-Hydroprene (technical 88%) | 0.14 | Zoecon |
| Barden® AG-1 (aluminum silicate) | 88.53 | Commodity |
| Hi-Sil® 233 (silica) | 5.00 | Commodity |
| Ethylene glycol | 5.00 | Commodity |

| Ready to Use Formula - Propetamphos/(RS)-Hydroprene | | |
|---|---|---|
| Ingredient | W/W% | Source |
| Propetamphos Tech. (90%) | 1.23 | Sandoz |
| (RS)-Hydroprene Technical (90%) | 0.36 | Zoecon |
| Sponto® AK 31-568 | 0.40 | Witco |
| Sponto® AK 31-56A | 1.60 | Witco |
| Water | 94.58 | Commodity |
| Xylene Range Aromatic Solvent | 1.00 | Commodity |
| BHT | 0.44 | Commodity |
| Colloid 643 | 0.02 | Commodity |
| Tetrasodium EDTA | 0.2 | Commodity |
| Citric Acid | 0.1 | Commodity |
| Dowicil® 75 (stabilizer) | 0.07 | DOW |

| 3.6% (S)-Hydroprene/59.7% Propetamphos EC | | |
|---|---|---|
| Ingredients | W/W% | Source |
| Propetamphos Tech. (89%) | 68.42 | Sandoz |
| (S)-hydroprene Tech. (91%) | 4.75 | Zoecon |
| BHT Antioxidant (butylated hydroxytoluene) | 5.00 | Eastman |
| Atlox 3406F-XF (proprietary blend of emulsifiers) | 15.27 | ICI |
| Atlox 3409 F-XF (proprietary blend of emulsifiers) | 6.56 | ICI |

In individual use the hydroprene foggers were 5 oz. cans applied at a rate of 250 ml/100 m$^2$ of area to be treated. The percentage of (RS)-hydroprene in the foggers was either 1.2% or 0.6% and of (S)-hydroprene, 0.3%. At least one fogger was placed in the kitchen and bathroom of each unit, with the remaining foggers (if any) being placed throughout the unit as needed. All cabinets and drawers were cleaned out and left open so the fog would cover as much area as possible.

The (RS)-hydroprene aerosol was a 5 oz. can of 0.6% a.i. applied at a rate of 2.50 ml/100 m$^2$ of area to be treated. Aerosol was applied to cabinets, drawers, under appliances, and any other possible cockroach harborage in the kitchen and bathroom.

Trap counts were taken at monthly intervals throughout the test, in the same manner as pre-treatment counts. In some studies, re-application of the hydroprene and/or propetamphos was done at either 3, 4, or 6 months after the initial application. The percent reduction was calculated using the formula disclosed herein in Roach Population Assessment. These tests ran for a period of up to 11 months.

Table 1 illustrates the effect of application of propetamphos alone, (RS)-hydroprene alone, and the mixture of both in various formulations on the German cockroach (Blatella germanica) population in the cockroach infested facilities up to nine months. For determination of efficacy, post-treatment counts were compared to pretreatment counts and expressed in percent of the reduction or increase of the number of cockroaches. The initial pretreatment count of cockroaches equals to 0% reduction.

In the following examples and tables, formulations used were as follows:

"H/P Mixture" is a tank mix of a 1.0% solution from 50% propetamphos EC, a 0.12% solution from 65.7% (RS)-hydroprene EC, and water.

"H/P Combination" is a combination treatment using 0.6% (RS)-hydroprene fogger and a 1% solution from 50% propetamphos EC.

"(RS)-hydroprene 0.12% EC" is a 0.12% solution from 65.7% (RS)-hydroprene EC in water.

Propetamphos 1.0% EC is a 1.0% solution from 50% propetamphos EC in water.

## TABLE 1

### Formulation (Number of Apartments Treated)

### Percent of Reduction of Cockroaches

| Months | (RS) Hydroprene EC 0.12% (20) | (RS) Hydroprene Fogger 0.6% (16) | Propetamphos EC 1% (19) | H/PMixture EC 0.12/1% (15) | H/PCombination H-Fogger/P-EC (16) |
|---|---|---|---|---|---|
| 0 | 0% | 0% | 0% | 0% | 0% |
| 1 | -69% | -33% | 53% | 78% | 89% |
| 2 | -77% | 21% | 80% | 75% | 94% |
| 3 | -18% | -- | 78% | 80% | 97%R |
| 4 | -56% | -- | 61%R | 88%R | 95% |
| 5 | term | -- | 67% | 90% | 96% |
| 6 | | 71% | 22% | 95% | 97% |
| 7 | | term | term | -- | -- |
| 8 | | | | 94% | 97% |
| 9 | | | | 99% | 100% |

R = retreatment with the same agent

Table 1 shows that in reducing the cockroach population, the mixture of propetamphos and (RS)-hydroprene in emulsifiable concentrate forms (H/P mixture) and the combination of (RS)-hydroprene fogger and propetamphos emulsifiable concentrate (H/P Combination) are highly superior to the treatment with propetamphos alone or (RS)-hydroprene alone. The residual and toxic activity of the H/P Mixture and of the H/P Combination were extended. In addition, 89% of the surviving adult cockroaches at 4 months following the application of the H/P Mixture were "IGR adults", i.e. abnormal and infertile cockroaches.

Treatment with propetamphos alone resulted in supression of 80% of the cockroach population by the second month but from the third months on such reduction slowly ceased and at 6 months the reduction caused by propetamphos alone was only 22% against the original number of cockroaches. Remaining surviving normal adult cockroaches were at all times capable of reproducing and hence able to restore the population within the short time after the residual levels decreased to the pretreatment levels.

Treatment of a cockroach population by (RS)-hydroprene EC alone actually increased the population of cockroaches by approximately 56% in four to six months following treatment. Nevertheless, these cockroaches were all IGR abnormal adults and were therefore unable to reproduce.

10

EXAMPLE 2

Results obtained from other individual field testing are illustrated in Tables 2-11. %R = percent reduction of pretreatment count. IGR = percent of juvenile hormone affected adults as compared with normal adults only. N = percent of nymphs in the total population. A = percent of adults in the total population.

A. The Fairfield Inn Apartments were treated with 1.2% (RS)-hydroprene fogger, 0.6% (RS)-hydroprene aerosol, and 1% propetamphos EC. Thirty-four apartments total were treated. Results are given in Table 2.

**TABLE 2**
**Fairfield Apartments**

Pre-Treat Counts
Initial                    986

Post-Treatment % Reduction

|          | %R  | IGR | N   |
|----------|-----|-----|-----|
| 0 Months | 0   | 0   | 64  |
| 1 Month  | 71  | 52  | 50  |
| 2 Month  | 78  | 84  | 43  |
| 3 Month  | 86  | 77  | 34  |
| 4 Month  | 91  | 93  | 37  |
| 5 Month  | 95  | 92  | 27  |
| 6 Month  | 90  | 93  | 26  |
| 7 Month  | -   | -   | -   |
| 8 Month  | 94  | 93  | 22  |
| 9 Month  | -   | -   | -   |
| 10 Month | -   | -   | -   |
| 11 Month | 100 | 0   | 100 |

B. The Willows Apartments were treated with 0.6% (RS)-hydroprene fogger, 0.6% (RS)-hydroprene aerosol, and 1% propetamphos EC. The hydroprene treatment was repeated at four months after the initial treatment. The aerosol was sprayed around the kitchen area, in the bathroom and in the closet in these types of units. Then a single fogger was placed in the center of the room. Propetamphos was applied as a spot treatment. Twenty-four apartments were treated. Results are given in Table 3.

**TABLE 3**
**Willows Apartments**

Pre-Treat Counts
Initial                    885

Post-Treatment % Reduction

|          | %R  | IGR | N   |
|----------|-----|-----|-----|
| 0 Months | 0   | 0   | 0   |
| 1 Month  | 59  | 48  | 69  |
| 2 Month  | 72  | 80  | 55  |
| 3 Month  | 82  | 81  | 50  |
| 4 Month  | 85  | 87  | 45  |
| 5 Month  | 92  | 89  | 40  |
| 6 Month  | 95  | 97  | 28  |
| 7 Month  | -   | -   | -   |
| 8 Month  | 98  | 83  | 14  |
| 11 Month | 99  | 75  | 0   |

C. The Northwood Apartments are government subsidized units from two to four bedrooms with one or two baths. A group of 20 apartments was used to evaluate the effects of a 1.0% propetamphos E.C.

11

treatment without any (RS)-hydroprene. This application was made per label directions using an average of 1 quart solution per apartment. The highest percent reduction was at 2 months with 80%, at which point it dropped until a re-treatment at 4 months. The level of control never reached as high as the various (RS)-hydroprene/propetamphos treatments. The propetamphos units were dropped from testing at month 9 and re-treated with hydroprene and propetamphos. The last treatment at the Northwood apartments was a 0.12% (RS)-hydroprene E.C. tank mixed with a 1.0% propetamphos E.C. and applied according to the propetamphos label. A 1 gallon B & G compressed air sprayer was used for this treatment as well as for the propetamphos E.C. applications. This treatment provided fairly good control initially and with a 4 month re-treatment gave 99% reduction by the ninth month. Number of apartments included in each treatment is in parenthesis.

## TABLE 4

**Northwood Apartments (20)**
**Propetamphos 1% EC**

Pre-Treat Counts

Initial 290

Post-Treatment % Reduction

| | %R | IGR | N |
|---|---|---|---|
| 0 Month | 0 | 0 | 0 |
| 1 Month | 53 | 1 | 45 |
| 2 Month | 80 | 0 | 50 |
| 3 Month | 78 | 10 | 67 |
| 4 Month (retreated) | 61 | 7 | 60 |
| 5 Month | 67 | 2 | 57 |
| 6 Month | 22 | 7 | 70 |
| 8 Month | 77 | 17 | 66 |

## TABLE 5

**Northwood Apartments (18)**
**(RS)-Hydroprene 0.6% Fogger and 0.6% aerosol;**
**Propetamphos 1% EC**

Pre-Treat Counts

Initial 641

Post-Treatment % Reduction

| | %R | IGR | N |
|---|---|---|---|
| 0 Month | 0 | 0 | 0 |
| 1 Month | 91 | 56 | 34 |
| 2 Month | 96 | 71 | 26 |
| 3 Month | 97 | 64 | 22 |
| 4 Month (retreated) | 99 | 75 | 50 |
| 5 Month | 99 | 33 | 40 |
| 6 Month | 98 | 14 | 50 |
| 7 Month | - | - | - |
| 8 Month | 99 | 50 | 0 |
| 9 Month | 100 | 100 | 0 |

## TABLE 6

**Northwood Apartments (16)**
**(RS)-Hydroprene 0.6% aerosol;**
**Propetamphos 1% EC**

Pre-Treat Counts

Initial 773

Post-Treatment % Reduction

| | %R | IGR | N |
|---|---|---|---|
| 0 Month | 0 | 0 | 0 |
| 1 Month | 88 | 68 | 38 |
| 2 Month | 88 | 75 | 46 |
| 3 Month | 84 | 83 | 47 |
| 4 Month (retreated) | 82 | 83 | 53 |
| 5 Month | 87 | 96 | 54 |
| 6 Month | 90 | 85 | 29 |
| 8 Month | 96 | 80 | 11 |
| 9 Month | 99 | 100 | 33 |

EP 0 394 230 B1

TABLE 7

Northwood Apartments (16)
(RS)-Hydroprene 0.6% fogger;
Propetamphos 1% EC
Pre-Treat Counts

Initial                          593

Post-Treatment % Reduction

| | IR | IGR | N |
|---|---|---|---|
| 0 Month | 0 | 0 | 0 |
| 1 Month | 89 | 44 | 43 |
| 2 Month | 94 | 64 | 35 |
| 3 Month | 97 | 58 | 25 |
| 4 Month | 95 | 79 | 32 |
| 5 Month | 96 | 59 | 26 |
| 6 Month | 97 | 67 | 37 |
| 7 Month | - | - | - |
| 8 Month | 97 | 50 | 48 |
| 9 Month | 100 | 100 | 50 |

TABLE 8

Northwood Apartments (16)
0.12% (RS)-Hydroprene 5E;
1% Propetamphos EC (Tank Mix)
Pre-Treat Counts

Initial                          1004

Post-Treatment % Reduction

| | IR | IGR | N |
|---|---|---|---|
| 0 Month | 0 | 0 | 0 |
| 1 Month | 78 | 51 | 42 |
| 2 Month | 75 | 58 | 47 |
| 3 Month | 80 | 94 | 36 |
| 4 Month | 88 | 89 | 19 |
| 5 Month | 90 | 94 | 6 |
| 6 Month | 95 | 95 | 15 |
| 8 Month | 94 | 83 | 21 |
| 9 Month | 99 | 83 | 25 |

D. One half of the Chateau apartments were treated with Mr. Scott's® 0.5% ready-to-use chlorpyrifos (Table 10). Chlorpyrifos is the common name for the insecticide O,O-diethyl O-(3,5,6-trichloro-2-pyridinyl)phosphorothioate (USP 3,244,586). In the second half of the apartments 0.6% (RS)-hydroprene fogget at 250 ml/100 m² and 0.6% 5 oz. (RS)-hydroprene aerosol for the kitchen and bathroom were used (Table 9).

The results show an increase in both test populations, with the (RS)-hydroprene treated apartments increasing at a slower rate. After the six month data point the chlorpyrifos treatment was terminated for various reasons.

13

## TABLE 9

### Chateau Apartments
### (RS)-Hydroprene 0.6% fogger and 0.6% aerosol;
### Chlorpyrifos 0.5%

**Pre-Treat Counts**

| | | | |
|---|---|---|---|
| Initial | 127 | | |
| | **Post-Treatment % Reduction** | | |
| | **%R** | **IGR** | **N** |
| 0 Month | 0 | 0 | 0 |
| 1 Month | -218 | 58 | 65 |
| 2 Month | -172 | 71 | 72 |
| 3 Month | -164 | 69 | 65 |
| 4 Month | - | - | - |
| 5 Month | - | - | - |
| 6 Month | -87 | 26 | 52 |

## TABLE 10

### Chateau Apartments
### Chlorpyrifos 0.5%

**Pre-Treat Counts**

| | | | |
|---|---|---|---|
| Initial | 103 | 0 | 72 |
| | **Post-Treatment % Reduction** | | |
| | **%R** | **IGR** | **N** |
| 0 Month | 0 | 0 | 0 |
| 1 Month | -242 | 36 | 73 |
| 2 Month | -561 | 45 | 73 |
| 3 Month | -451 | 57 | 72 |
| 4 Month | - | - | - |
| 5 Month | - | - | - |
| 6 Month | -287 | 17 | 65 |

EXAMPLE 3

In a similar manner and following the procedures of Examples 1 and 2, two buildings of the Whitsonian Apartments were treated as follows.

Buildings 1 (13 units) and 5 (8 units) were treated with 59.7% propetamphos/7.2% (RS)-hydroprene EC at initial treatment.

Building 1 was re-treated at 6 months with 59.7% propetamphos/7.2% (RS)-hydroprene EC.

Building 5 was re-treated at 6 months with 59.7% propetamphos/3.6% (S)-hydroprene EC.

The results in Table 11 show excellent and continuing reduction of the cockroach population through ten months, with the population in the (S)-hydroprene-treated apartments completely eradicated at nine months.

TABLE 11

Whitsonian Apartments

| | Building 1 | Building 5 |
|---|---|---|
| Pre-treatment counts | 999 | 252 |

Post-Treatment % Reduction

| | Building 1 | | | Building 5 | | |
|---|---|---|---|---|---|---|
| | %R | IGR | %N | %R | IGR | %N |
| 0 Month | 0 | 0 | 69 | 0 | 0 | 54 |
| 2 Month | 46 | 67 | 48 | 55 | 73 | 54 |
| 3 Month | 58 | 62 | 29 | 55 | 83 | 39 |
| 4 Month | 80 | 79 | 31 | 84 | 83 | 44 |

Retreat at 6 Months

| | | | | | | |
|---|---|---|---|---|---|---|
| 7 Month | 86 | 39 | 45 | 98 | 20 | 17 |
| 8 Month | 89 | 56 | 47 | 98 | 50 | 60 |
| 9 Month | 93 | 56 | 49 | 100 | 0 | 0 |
| 10 Month | 95 | 59 | 27 | 100 | 0 | 0 |

EXAMPLE 4

In a similar manner and following the procedures of Examples 1 and 2, the spot treatment with 1% propetamphos EC is followed with general space treatment using any one of hydroprene EC, hydroprene 0.6% fogger concentrate, hydroprene 0.6% fogger, hydroprene 1.2% fogger concentrate, hydroprene 1.2% fogger and hydroprene 0.6% aerosol for control of cockroach population.

All formulations used in this example are disclosed in Example 1 in details.

EXAMPLE 5

In a similar manner and following the procedures of Examples 1 and 2, the general space treatment with 1% propetamphos EC is followed with general space treatment using any one of hydroprene EC, hydroprene 0.6% fogger concentrate, hydroprene 0.6% fogger, hydroprene 1.2% fogger concentrate, hydroprene 1.2% fogger and hydroprene 0.6% aerosol is used for control of cockroach population.

All formulations used in this example are disclosed in Example 1 in details.

**Claims**

1. An insecticidal composition comprising propetamphos and (S)-hydroprene wherein the weight ratio of propetamphos : (S)-hydroprene is from 2.6:1 to 224:1.

2. A composition according to Claim 1 wherein the weight ratio of propetamphos : (S)-hydroprene is from 7.7:1 to 41.3:1.

3. A method for control of a cockroach population which method comprises applying to the locus of the cockroach infestation an insecticidal composition according to Claim 1.

4. A method according to Claim 3 which comprises applying from 1 to 20 mg of (S)-hydroprene and from 52 to 224 mg of propetamphos per m$^2$ of cockroach locus.

**5.** A method according to Claim 4 which comprises applying from 2 to 15 mg of (S)-hydroprene and from 76 to 148 mg of propetamphos per m$^2$ of cockroach locus.

**Patentansprüche**

**1.** Eine Zusammensetzung mit insektizider Wirkung enthaltend Propetamphos und (S)-Hydropren worin das Gewichtsverhältnis von Propetamphos : (S)-Hydropren von 2.6:1 bis 224:1 beträgt.

**2.** Eine Zusammensetzung gemäss Anspruch 1 worin das Gewichtsverhältnis von Propetamphos : (S)-Hydropren von 7.7:1 bis 41.3:1 beträgt.

**3.** Ein Verfahren zur Kontrolle der Schabenpopulation wobei dieses Verfahren darin besteht an dem Ort des Schabenbefalles eine Zusammensetzung gemäss Anspruch 1 anzuwenden.

**4.** Ein Verfahren gemäss Anspruch 3 das die Anwendung von 1 bis 20 mg (S)-Hydropren und von 52 bis 224 mg Propetamphos per m$^2$ des von Schaben befallenen Ortes beinhaltet.

**5.** Ein Verfahren gemäss Anspruch 4 das die Anwendung von 2 bis 15 mg (S)-Hydropren und von 76 bis 148 mg Propetamphos per m$^2$ des von Schaben befallenen Ortes beinhalten.

**Revendications**

**1.** Une composition insecticide comprenant du propetamphos et du (S)-hydroprène dans laquelle le rapport pondéral propetamphos:(S)-hydroprène est de 2,6:1 à 224:1.

**2.** Une composition selon la revendication 1, dans laquelle le rapport pondéral propetamphos: (S)-hydroprène est de 7,7:1 à 41,3:1.

**3.** Une méthode de lutte contre une population de blattes, laquelle méthode comprend l'application sur le lieu d'infestation des blattes d'une composition insecticide selon la revendication 1.

**4.** Une méthode selon la revendication 3, laquelle méthode comprend l'application de 1 à 20 mg de (S)-hydroprène et de 52 à 224 mg de propetamphos par m$^2$ d'habitat des blattes.

**5.** Une méthode selon la revendication 4, laquelle méthode comprend l'application de 2 à 15 mg de (S)-hydroprène et de 76 à 148 mg de propetamphos par m$^2$ d'habitat des blattes.